Europäisches Patentamt

European Patent Office

Office européeñ des brevets

(11) Numéro de publication: **0 061 385**
**A1**

(12) ## DEMANDE DE BREVET EUROPEEN

(21) Numéro de dépôt: 82400429.5

(22) Date de dépôt: 10.03.82

(51) Int. Cl.³: **B 29 D 7/14**
**G 01 B 11/24**

(30) Priorité: 13.03.81 FR 8105022

(43) Date de publication de la demande:
29.09.82 Bulletin 82/39

(84) Etats contractants désignés:
AT BE CH DE GB IT LI LU NL SE

(71) Demandeur: E.M.S. EQUIPEMENTS MECANIQUES
SPECIALISES Société Anonyme
33 avenue du Maine
F-75755 Paris Cedex 15(FR)

(72) Inventeur: Tesson, Jacques
84 Boulevard Gambetta
F-94130 Nogent sur Marne(FR)

(74) Mandataire: Bouju, André
38 Avenue de la Grande Armée
F-75017 Paris(FR)

(54) Procédé pour régler l'alimentation d'une calandre de laminage de matériau plastique et dispositif pour sa mise en oeuvre.

(57) Procédé et dispositif pour régler l'alimentation d'une calandre de laminage de matériau plastique par formation d'un bourrelet 5 entre les cylindres d'entrée de la calandre.

Le matériau, issu d'une extrudeuse 6 est apporté par un distributeur 4 orientable. Une caméra électronique 23 émet vers un boîtier de commande 27 une image divisée en trois zones, que y est analysée. La détection des zones déficientes du bourrelet provoque une action par la ligne 29 sur le débit de l'extrudeuse et, par la ligne 31, sur la cadence de déplacement du distributeur.

Application au réglage de l'alimentation des calandres.

FIG.1

"Procédé pour régler l'alimentation d'une calandre de laminage
de matériau plastique et dispositif pour sa mise en oeuvre"

La présente invention concerne un procédé pour régler l'alimentation d'une calandre de laminage de matériau plastique, élastomère ou polymère.

L'invention concerne également un dispositif pour la mise en oeuvre de ce procédé.

L'alimentation d'une calandre s'effectue généralement à partir d'une extrudeuse au moyen d'un convoyeur qui apporte sous forme pâteuse le matériau à calandrer entre les deux premiers cylindres de la calandre. Il se forme à cet endroit un bourrelet de matériau qui assure une certaine réserve d'alimentation. Cette réserve est indispensable, car l'arrêt d'une calandre par suite d'une alimentation défaillante entraîne de longs délais de remise en route.

Le fait de prévoir, par sécurité, un bourrelet important n'est pas sans inconvénients. En effet, le matériau en attente se refroidit et ses propriétés physiques, notamment sa viscosité se modifient, ce qui entraîne des irrégularités dans le produit fabriqué.

Enfin, la régularité du bourrelet sur toute sa longueur est aussi une condition essentielle pour l'obtention d'un produit homogène.

Or, ce bourrelet est constitué d'un matériau pâteux très visqueux qui, sous l'action conjuguée du travail des cylindres et de l'alimentation extérieure par le convoyeur, subit des mouvements de flux et de reflux. Il a l'aspect d'un magma informe en mouvement permanent qui présente une prééminence se déplaçant avec le point d'approvisionnement du convoyeur.

On tend à abandonner le procéder de réglage de l'alimentation qui consiste en une observation plus ou moins prolongée du bourrelet par l'opérateur qui, par synthèse, en apprécie le volume global ainsi que la tendance à grossir ou maigrir, et en un réglage manuel du débit de la machine en amont, en fonction de cette appréciation.

Dans ce but, des tentatives ont déjà été faites pour "mesurer" le bourrelet par des systèmes à "palpeur" (mécanique, ultrasonique, etc...) qui présentent un certain nombre d'inconvénients, notamment les suivants.

Les appareils de mesure ne sont généralement pas adaptés au matériau tel qu'il se présente : visqueux, chaud, adhérent, sans forme, en mouvement avec émanation de vapeur. Les palpeurs mécaniques s'encrassent par adhérence du matériau, ils risquent d'être submergés et endommagés. La réflexion d'ultrason est douteuse, les palpeurs s'encrassent et risquent également d'être submergés par la prééminence du point d'approvisionnement.

Ces appareils sont prévus pour réaliser des mesures linéaires et ponctuelles d'une masse informe dans les trois dimensions et en mouvement permanent. Mais ces mesures ne sont pas significatives du volume à mesurer.

Enfin, les palpeurs sont disposés au-dessus du bourrelet en contact ou très près du matériau, de sorte qu'ils sont dans une ambiance peu appropriée (température, émanations) et s'encrassent et se déforment. En outre, ils encombrent une zone qui généralement doit rester libre pour permettre l'approvisionnement du matériau. Mécaniquement, ils risquent des détériorations par le mouvement ou le contact même inopiné du matériau.

Outre que ces dommages peuvent nuire à leur bon fonctionnement, ils présentent le risque très sérieux que l'ensemble ou une des pièces du palpeur se détache et tombe entre les cylindres de la calandre engendrant des dommages de surface lourds de conséquence par l'arrêt de plusieurs semaines de l'installation et les frais de remise en état.

La présente invention vise à réaliser un procédé et un dispositif de réglage d'alimentation fonctionnant automatiquement et basé sur un procédé de mesure excluant les inconvénients précités.

Ce résultat est atteint, conformément à l'invention, en effectuant les opérations suivantes :

a) on forme une image du bourrelet au moyen d'une caméra électronique;

b) on analyse cette image suivant les éléments d'un quadrillage prédéterminé pour calculer le rapport de la surface des éléments sombres correspondant au bourrelet à la surface des éléments clairs;

c) on détermine à partir de cette analyse la hauteur moyenne du bourrelet;

d) on compare cette hauteur à une valeur de consigne prédéterminée;

e) on commande l'organe d'alimentation pour maintenir la hauteur moyenne du bourrelet égale à la valeur de consigne.

La régulation de débit ainsi obtenue a pour conséquence une hauteur pratiquement constante du bourrelet. On peut, dans ces conditions, réduire cette hauteur à un minimum compatible avec les temps de réponse des organes de régulation.

Suivant une réalisation préférée de l'invention, on divise l'image du bourrelet en un certain nombre de zones, on effectue séparément pour chaque zone les opérations b) à d) précitées, et l'on commande la cadence des déplacements de l'organe distributeur de manière à obtenir une hauteur sensiblement égale du bourrelet dans les diverses zones.

Non seulement l'alimentation est réglée globalement, mais également sa répartition sur la longueur du bourrelet, assurant l'obtention d'un produit final homogène.

Suivant une réalisation perfectionnée du procédé, on réalise successivement autant d'images du bourrelet qu'il y a de zones, chacune de ces images correspondant à la position de l'organe distributeur dans une zone distincte, et l'on mémorise ces images en les superposant.

Par cette superposition, on neutralise l'effet perturbateur sur l'image provenant du matériau en cours de chute de l'organe distributeur sur le bourrelet.

Suivant un second aspect de l'invention, le dispositif pour régler l'alimentation d'une calandre de laminage de matériau plastique par formation d'un bourrelet de ce matériau sur les cylindres d'entrée de la calandre, et notamment pour appliquer le procédé décrit plus haut, comprend un organe d'alimentation à débit réglable pour apporter le matériau sur la calandre, et des moyens, tels qu'un organe distributeur mobile, pour répartir le matériau suivant la longueur du bourrelet. Il est caractérisé en ce qu'il comprend une caméra électronique pour viser le bourrelet, reliée à une surface photosensible quadrillée en cellules indépendantes reliées à un étage d'analyse et de calcul lui-même relié en sortie à un étage de commande de l'organe d'alimen-tation.

La surface photosensible est en outre avantageusement divisée en un certain nombre de zones correspondant à des zones respectives échelonnées suivant la longueur du bourrelet, les cellules de chaque zone étant reliées à des entrées distinctes de l'étage d'analyse et de calcul, et cet étage étant lui-même relié à un étage de commande de l'organe distributeur.

Le dispositif comprend encore des moyens de commande sensibles à la position de l'organe distributeur pour émettre vers l'étage d'analyse et de calcul un signal représentatif de cette position, et l'étage d'analyse et de calcul comprend des moyens pour commander l'arrêt de l'organe distri-buteur au-dessus de chaque zone du bourrelet pendant une durée prédéterminée.

D'autres particularités et avantages de l'invention ressortiront encore de la description détaillée qui va suivre.

Aux dessins annexés, donnés à titre d'exemple non limitatif.

La figure 1 est une vue d'ensemble, semi-schématique, d'un dispositif conforme à l'invention;

la figure 2 est une vue partielle en coupe longitudinale, suivant II-II de la figure 1;

la figure 3 est une vue du dispositif de visualisation;

la figure 4 est une vue en plan, suivant IV-IV de la figure 1, de l'organe distributeur;

la figure 5 est un schéma par blocs de l'étage d'analyse et de calcul.

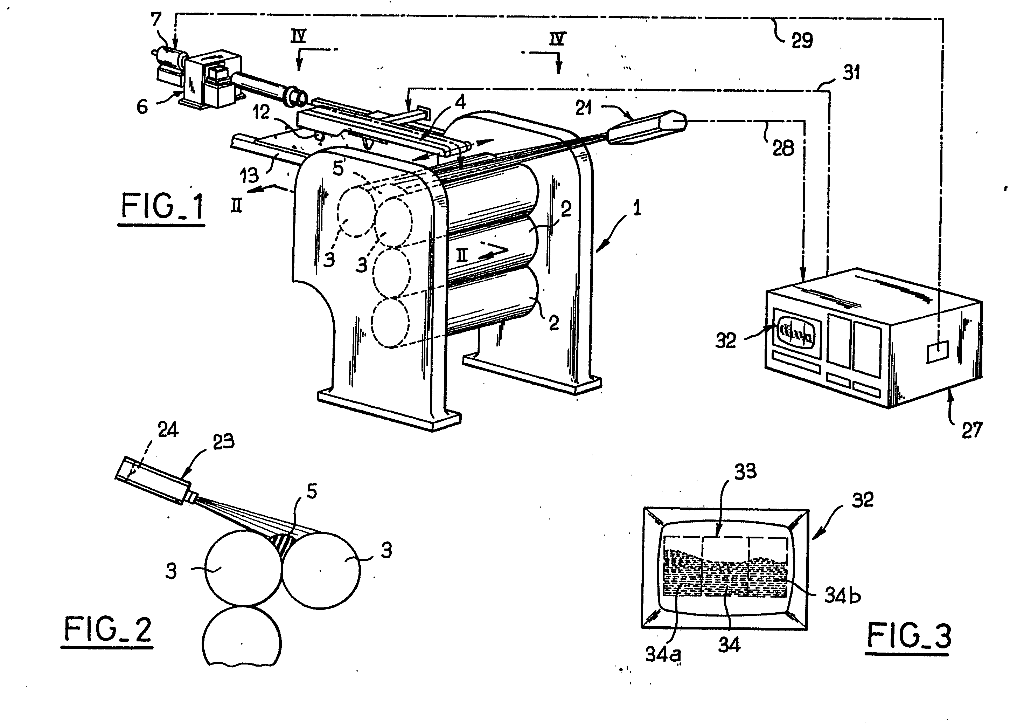

En référence à la figure 1, une calandre 1 comprend un certain nombre de cylindres 2 de laminage et les deux cylindres supérieurs 3 sont alimentés en matériau plastique par un distributeur 4 à courroie. La zone de chute du matériau distribué se trouve entre les cylindres 3 où se forme un bourrelet 5 constituant une réserve de matériau à laminer (figure 2).

Le distributeur 4 est lui-même alimenté en queue par une extrudeuse 6 actionnée par un moteur 7. Le tambour de queue 8 du distributeur 4 est actionné par l'intermédiaire d'un moteur 9 fixé sur le châssis 11 du distributeur, et ce châssis est monté pivotant autour d'un axe vertical 12 sur un bâti 13 solidaire de la calandre.

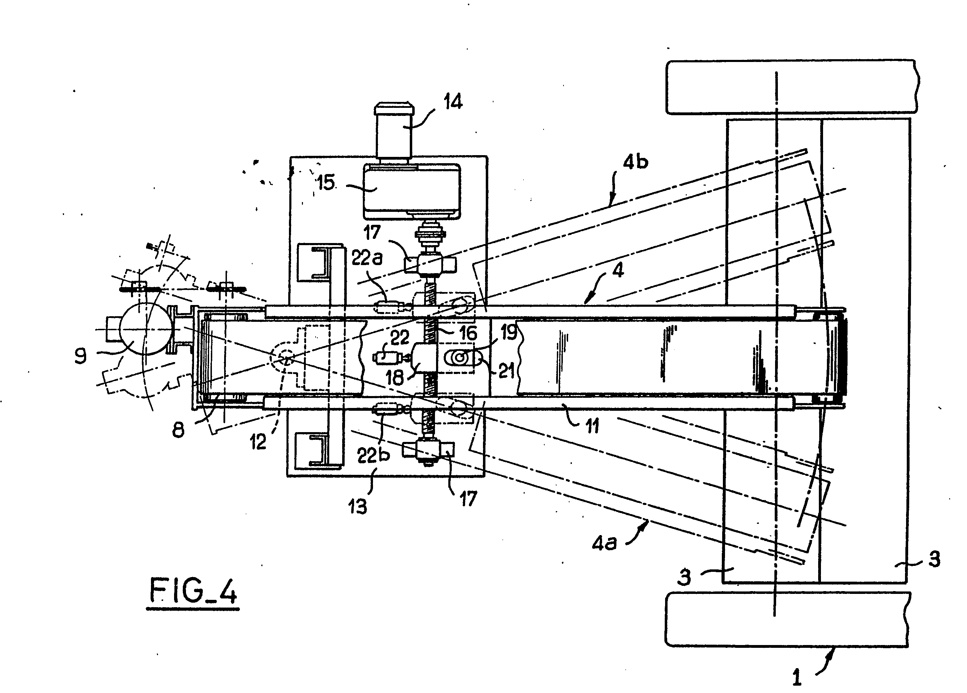

Un système de commande composé d'un moteur 14 et d'un réducteur 15 est fixé sur le bâti (figure 4) pour actionner une vis sans fin 16 montée sur des paliers 17 fixés également sur le bâti 13.

Cette vis porte un écrou 18 muni d'un picot 19 engagé dans un trou oblong 21 pratiqué dans le châssis 11 du distributeur. On comprend que l'actionnement de la vis 16, en déplaçant l'écrou 18, fait varier l'orientation du distributeur entre deux positions extrêmes 4a, 4b, lui permettant ainsi de répartir le matériau issu de l'extrudeuse sur toute la longueur des cylindres 3 pour former le bourrelet 5.

Un contact à galet 22 est fixé sur le bâti 13 et disposé pour être actionné par l'écrou 18 quand le distributeur vient en position centrale. Deux contacts analogues 22a, 22b sont disposés pour être actionnés quand le distributeur vient dans ses positions extrêmes 4a, 4b. Ces contacts

6

sont reliés à un circuit électrique qui sera décrit plus loin en détail.

Une caméra électronique 23 est fixée sur un support non représenté et orientée de manière à viser la totalité du bourrelet 5 (figures 1 et 2), ledit bourrelet recevant un flux de lumière convenable de projecteurs non représentés.

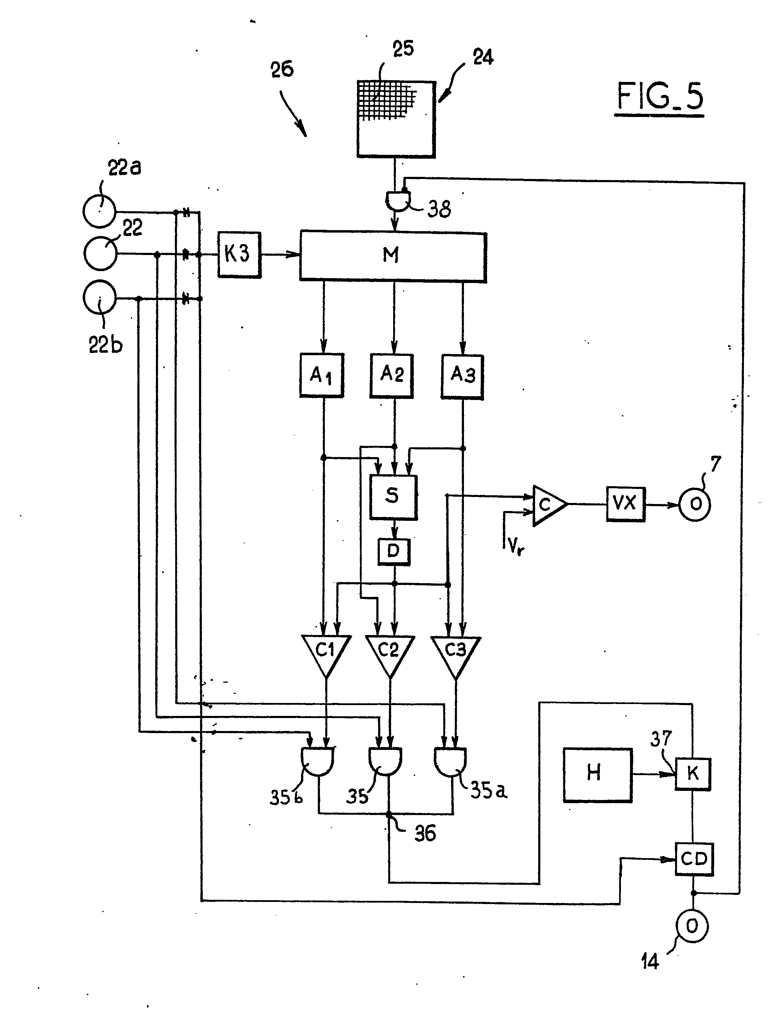

Cette caméra possède une surface photosensible 24 composée, de façon connue, d'un quadrillage de cellules photo-électriques 25 reliées chacune à un étage d'analyse et de calcul 26 (figure 5) contenu dans un boîtier 27 par une ligne 28.

Du boîtier 27 partent deux lignes électriques 29 et 31 reliées respectivement au moteur 7 de l'extrudeuse 6 et au moteur 14 commandant l'orientation du distributeur 4.

Le boîtier 27 comporte, en façade, un écran 32 de visualisation du bourrelet sur lequel l'image 33 est divisée en trois zones: une zone centrale 34 et deux zones latérales 34a, 34b (figure 3).

On va maintenant décrire, en référence à la figure 5, l'étage d'analyse et de calcul 26 contenu dans le boîtier 27.

Cet étage comprend une mémoire M dont les diverses positions sont reliées respectivement aux cellules de la surface photosensible 24. Cette surface est divisée en trois zones, de même que la mémoire M, ces trois zones correspondant aux zones de l'image mentionnées plus haut. La mémoire M est une mémoire à accumulation.

Chacune des trois zones de la mémoire est reliée à un analyseur, respectivement A1, A2, A3, d'un type connu, qui compte, chacun dans sa zone, les cellules 25 respectivement claires et sombres et délivre un signal représentatif du rapport de ces catégories d'éléments.

Les contacts 22, 22a, 22b décrits plus haut et signalant la position du distributeur 4 sont reliés à un compteur K3 ayant une capacité de trois unités et délivrant un signal au bout de la quatrième impulsion reçue. Ce signal est appliqué à la mémoire M pour lui faire vider son contenu dans les analyseurs A1, A2, A3 et pour le remettre à zéro.

Les analyseurs sont reliés en parallèle à un sommateur S dont la sortie est raccordée à un diviseur par trois D lui-même relié en sortie à des entrées de trois comparateurs C1, C2, C3. L'autre entrée de ces comparateurs est reliée à la sortie des analyseurs A1, A2, A3 respectivement, et les sorties des comparateurs sont reliées aux entrées d'une porte "ET" 35, 35a, 35b qui reçoivent d'autre part respectivement les signaux des contacts 22, 22a, 22b et dont les sorties sont réunies en un point commun 36.

Une horloge H est reliée en sortie à un compteur K de capacité donnée, dans lequel une décade supplémentaire peut être mise en service grâce à une entrée de signal 37 reliée au point commun 6. La sortie de ce compteur est reliée à un étage CD de commande du moteur 14 d'orientation du distributeur 4, de manière à faire tourner ce moteur à chaque dépassement de capacité du compteur K. L'étage CD est en outre relié aux contacts 22, 22a, 22b de manière que le moteur 14 s'arrête lorsqu'un de ces contacts s'enclenche.

La sortie de l'étage CD est en outre reliée à une entrée inverseuse d'une porte ET 38 interposée sur la liaison 28 entre la surface sensible H et la mémoire M.

D'autre part, la sortie du diviseur D est reliée à une entrée d'un comparateur C dont l'autre entrée reçoit une tension de référence $V_r$ ajustable et dont la sortie est reliée à un variateur VX de la vitesse du moteur 7 de l'extrudeuse, de manière à faire augmenter cette vitesse quand le signal de sortie du sommateur est inférieur à la tension de référence $V_r$.

En fonctionnement, lorsque le distributeur 4 est

8

immobilisé dans une orientation donnée, la mémoire M enregistre l'image d'ensemble du bourrelet, y compris l'image du produit tombant en chute libre en tête du distributeur 4.

Quand le distributeur se déplace angulairement, cet enregistrement est stoppé grâce à la porte 38.

Pendant les séjours du distributeur dans trois positions successives 4, 4a, 4b, la mémoire M accumule les trois images successives, ce qui compense l'effet de rideau du produit tombant en chute libre.

Une fois les trois images enregistrées, le compteur K3 envoie un signal qui transmet le contenu de la mémoire M, zone par zone, dans les analyseurs A1, A2, A3. Les signaux émis par ces analyseurs sont représentatifs de la hauteur du bourrelet dans les zones respectives.

Le signal en sortie du diviseur D est représentatif de la hauteur moyenne du bourrelet. Par comparaison avec la valeur de consigne représentée par la tension $V_r$, il en résulte, par le variateur VX, une accélération ou un ralentissement de l'extrudeuse 6, qui adapte ainsi le débit global de matériau brut.

D'autre part, les comparateurs C1, C2, C3 comparent la hauteur du bourrelet dans chaque zone avec sa hauteur moyenne et, si une différence est constatée dans une zone, un signal est émis.

Si la hauteur du bourrelet est uniforme, le compteur K délivre périodiquement une impulsion qui, par l'étage CD provoque un changement d'orientation du distributeur.

Dans le cas où une irrégularité de distribution est constatée, le signal émis par le comparateur correspondant est appliqué au compteur K uniquement si le distributeur 4 se trouve positionné au-dessus de la zone déficiente, grâce aux portes 35, 35a, 35b. Par ce signal, la décade supplémentaire du compteur K prolonge le temps de séjour du distributeur dans ladite zone, ce qui augmente son alimentation.

On voit que l'invention permet de résoudre deux problèmes distincts, à savoir l'adaptation continue du débit global d'alimentation pour avoir toujours un bourrelet de volume nécessaire et suffisant dans son ensemble, et une correction de la répartition de ce débit le long du bourrelet pour éviter d'avoir des zones déficientes.

Bien entendu, l'invention n'est pas limitée à l'exemple décrit mais couvre toute variante à la portée de l'homme de l'art, touchant notamment le circuit électrique.

L'invention couvre également le cas où le débit et la répartition seraient ajustés par d'autre moyens. Par exemple, au lieu d'une extrudeuse, l'alimentation pourrait être assurée par un ou plusieurs laminoirs à deux cylindres délivrant une ou plusieurs bandes du matériau de section ajustable suivant le débit désiré, plusieurs convoyeurs transportant chacun une bande en différents points du bourrelet.

10

## R E V E N D I C A T I O N S

1. Procédé pour régler l'alimentation d'une calandre (1) de laminage de matériau plastique par formation d'un bourrelet (5) de ce matériau entre les cylindres d'entrée (3) de la calandre, dans lequel on règle le débit de matériau au moyen d'un organe d'alimentation (6), et dans lequel on répartit le matériau sur la longueur du bourrelet par déplacement d'un organe distributeur (4), caractérisé en ce qu'on effectue les opérations suivantes:

a) on forme une image (33) du bourrelet au moyen d'une caméra électronique (23);

b) on analyse cette image suivant les éléments d'un quadrillage (24) prédéterminé pour calculer le rapport de la surface des éléments sombres correspondant au bourrelet à la surface des éléments clairs;

c) on détermine à partir de cette analyse la hauteur moyenne du bourrelet;

d) on compare cette hauteur à une valeur de consigne prédéterminée $(V_r)$;

e) on commande l'organe d'alimentation (6) pour maintenir la hauteur moyenne du bourrelet égale à la valeur de consigne.

2. Procédé conforme à la revendication 1, caractérisé en ce qu'on divise l'image (33) du bourrelet (5) en un certain nombre de zones (34, 34a, 34b), en ce qu'on effectue séparément pour chaque zone les opérations b) à d) précitées, et en ce qu'on commande la cadence des déplacements de l'organe distributeur (4) de manière à obtenir une hauteur sensiblement égale du bourrelet dans les diverses zones.

3. Procédé conforme à la revendication 2, caractérisé en ce qu'on réalise successivement autant d'images du bourrelet qu'il y a de zones, chacune de ces images correspondant à la position de l'organe distributeur dans une zone distincte, et en ce qu'on mémorise ces images en les superposant.

4. Dispositif pour régler l'alimentation d'une calandre (1) de laminage de matériau plastique par formation d'un bourrelet (5) de ce matériau sur les cylindres d'entrée (3) de la calandre, et notamment pour appliquer un procédé conforme à la revendication 1, comprenant un organe d'alimentation (6) à débit réglable pour apporter le matériau sur la calandre et des moyens, tels qu'un organe distributeur mobile (4), pour répartir le matériau suivant la longueur du bourrelet, caractérisé en ce qu'il comprend une caméra électronique (23) pour viser le bourrelet reliée à une surface photosensible (24) quadrillée en cellules (25) indépendantes reliées à un étage d'analyse et de calcul (26) lui-même relié en sortie à un étage de commande (7) de l'organe d'alimentation (6).

5. Dispositif conforme à la revendication 4, caractérisé en ce que la surface photosensible (24) est en outre divisée en un certain nombre de zones (33, 33a, 33b) correspondant à des zones respectives échelonnées suivant la longueur du bourrelet, les cellules (25) de chaque zone étant reliées à des entrées distinctes de l'étage d'analyse et de calcul, et cet étage étant lui-même relié à un étage de commande (14, 15) de l'organe distributeur (4).

6. Dispositif conforme à la revendication 5, caractérisé en ce qu'il comprend des moyens de commande (22, 22a, 22b) sensibles à la position de l'organe distributeur (4) pour émettre vers l'étage d'analyse et de calcul (26) un signal représentatif de cette position.

7. Dispositif conforme à la revendication 6, caractérisé en ce qu'il comprend un étage (M) de mémoire et d'accumulation pour stocker le contenu des cellules (25) de la surface photosensible (24), cet étage de mémoire étant relié à l'étage d'analyse et de calcul (26).

8. Dispositif conforme à l'une des revendications 6 ou 7, caractérisé en ce que l'étage d'analyse et de calcul comprend des moyens pour commander l'arrêt de l'organe distributeur au-dessus de chaque zone du bourrelet pendant une durée prédéterminée.

9. Dispositif conforme à la revendication 8, caractérisé en ce que l'étage d'analyse et de calcul comprend des moyens pour faire varier la durée de séjour de l'organe distributeur au-dessus de chaque zone du bourrelet.

FIG_1

FIG_2

FIG_3

0061385

FIG_4

0061385

0061385

FIG_5

**Office européen des brevets**

# RAPPORT DE RECHERCHE EUROPEENNE

Numéro de la demande

EP 82 40 0429

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR - A - 2 197 707 (H. BERSTORFF)<br><br>* en entier * | 1-3,7 | B 29 D 7/14<br>G 01 B 11/24 |
| Y | INSTRUMENTS & CONTROL SYSTEMS, volume 49, no. 3, mars 1976 RADNOR (US)<br>S. LEHRER "A fast, non-contact approach to accurate gauging" pages 51-57<br><br>* page 51, colonne de gauche, dernier paragraphe - page 52, colonne de gauche, paragraphe 3; page 56, colonne de droite, paragraphe 3 * | 1,4,7 | |
| Y | MESSEN & PRUFEN, no. 10, octobre 1977 WOERIGSHOFEN (DE)<br>W. SCHRAMBOCK "Berührungslos messen mit Halbleitersensoren" pages 631-636<br><br>* en entier * | 1,4 | B 29 D 7/00<br>G 01 B 11/02 |
| Y | US - A - 3 274 308 (J.T. FREEMAN)<br><br>* en entier et en particulier colonne 4, lignes 36-46 * | 1 | |

DOMAINES TECHNIQUES RECHERCHES (Int. Cl. ³)

./.

Le présent rapport de recherche a été établi pour toutes les revendications

| Lieu de la recherche | Date d'achèvement de la recherche | Examinateur |
|---|---|---|
| La Haye | 21-06-1982 | LABEEUW |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

               

& : membre de la même famille, document correspondant

OEB Form 1503. 03.82

Office européen
des brevets

**RAPPORT DE RECHERCHE EUROPEENNE**

| Catégorie | Citation du document avec indication, en cas de besoin, des parties pertinentes | Revendication concernée | |
|---|---|---|---|
| | **DOCUMENTS CONSIDERES COMME PERTINENTS** | | **CLASSEMENT DE LA DEMANDE** (Int. Cl.³) |
| A | DE - A - 1 679 857 (METZELER) <br><br> * document en entier * <br><br> -- | 1-3,6 <br> 8,9 | |
| A | DE - A - 2 522 060 (VEREINIGTE FLUGTECHNISCHE WERKE-FOKKER) <br><br> * en entier * <br><br> -- | 1-3,6 | |
| A | DE - A - 2 753 593 (HITACHI) <br><br> ---------------- | | **DOMAINES TECHNIQUES RECHERCHES** (Int. Cl.³) |

OEB Form 1503.2    06.78